Europäisches Patentamt

**19** European Patent Office

Office européen des brevets

**11** Publication number: **0 135 383**
**A2**

**12** # EUROPEAN PATENT APPLICATION

**21** Application number: **84305849.6**

**22** Date of filing: **28.08.84**

**51** Int. Cl.⁴: **H 04 M 3/56**

**30** Priority: **08.09.83 GB 8324058**

**43** Date of publication of application:
**27.03.85 Bulletin 85/13**

**84** Designated Contracting States:
**AT BE CH DE FR IT LI LU NL SE**

**71** Applicant: **PLESSEY OVERSEAS LIMITED**
**Vicarage Lane**
**Ilford Essex IGI 4AQ(GB)**

**72** Inventor: **Winsor, Russell**
**5 Millbank Close**
**Ilkeston Derbyshire(GB)**

**74** Representative: **Field, Howard John**
**The Plessey Company plc Beeston**
**Nottingham, NG9 1LA(GB)**

**54** Conference bridge circuit arrangements.

**57** A conference bridge circuit for telephone selects a predetermined number of signals from one or more data buses, each carrying multiplexed pulse code modulated signals and serially adds the signals selected. These are then multiplexed and transmitted back to the receivers of those telephones from which the predetermined signals were transmitted.

FIG. 1.

-1-

## CONFERENCE BRIDGE CIRCUIT ARRANGEMENTS

This invention relates to conference bridge circuit arrangements and particularly, but not exclusively to conference bridge circuit arrangements of large scale integrated circuit form.

Various types of conference bridge circuit arrangements for telephone systems are known and it is an object of the present invention to provide such a circuit arrangement which will enable conferencing of a selected number of parties from one or more data buses each being adapted to carry a plurality of multiplexed pulse code modulated (PCM) signals each representing speech from one of a plurality of telephone sets.

According to the present invention a conference bridge circuit arrangement for interconnecting a predetermined number of telephone sets in a pulse code modulated telephone system includes means for selecting a pretermined number of signals from one or more data buses, the or each data bus being adapted to carry a plurality of multiplexed pulse code modulated signals each representing a speech signal from one of a plurality of telephone sets, means for serially adding the signals selected, means for multiplexing the output signals from the serially adding means and means for retransmitting the multiplexed signals whereby a combination of speech signals is received by each of the predetermined number of telephone sets.

An embodiment of the invention will now be described by way of example only with reference to the accompanying drawings in which,

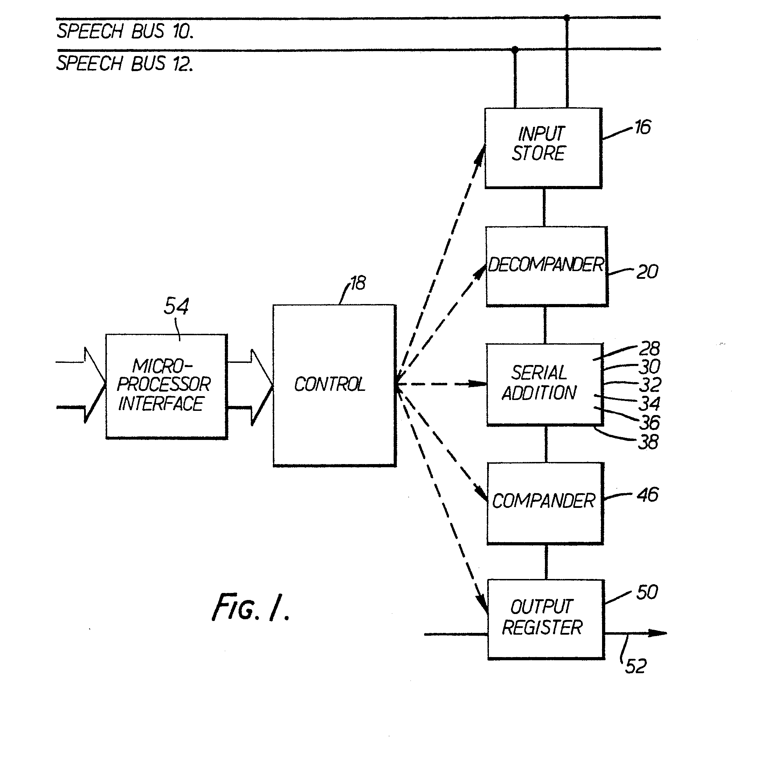

Figure 1 is a general block diagram of the conference bridge circuit arrangement for telephone systems according to the invention and,

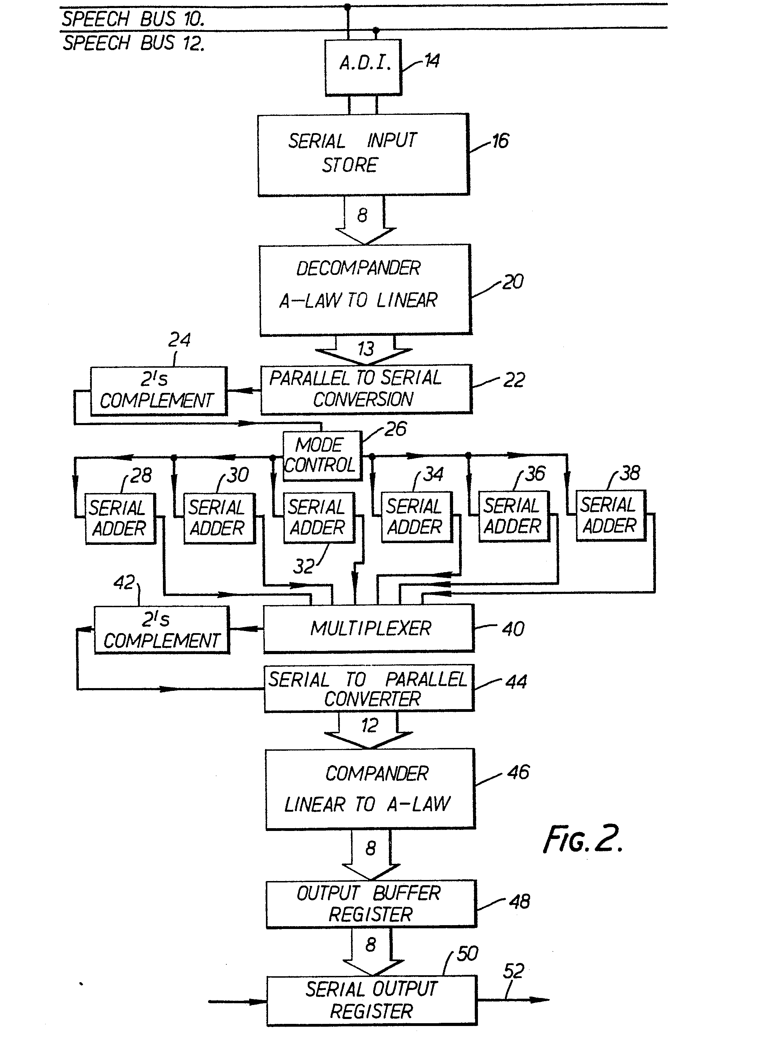

Figure 2 is a more detailed block diagram of part of the circuit arrangement shown in Figure 1.

The drawings illustrate two speech buses 10 and 12 each adapted to carry thirty-two speech channels from telephone sets of companded pcm multiplexed to 2.048 Mbits per second. The companding is in accordance with CCITT A-law code having alternate bit inversion (ADI) in which the most significant bit (bit one, sign bit) is unchanged, every alternate bit being inverted thereafter. This ADI is removed before the samples are conferenced, in a circuit 14.

A serial input store 16 functions as a speech switch. It contains six, eight stage, shift registers whose inputs can be gated to accept information off either bus 10 or 12. Each register is read once per frame in succession at regular intervals. It is possible for a store to output its contents to the system whilst it is being loaded from the buses. If there are less parties

-3-

involved in a conference than there are stores, the unused stores are forced to give a null code. All the operations described above are instigated under the action of a control 18. A decompander 20 is a combinational logic circuit and converts 8 bit A-law pcm to 13 bit linear pcm. The 13 bit linear pcm is parallel loaded into a shift register 22 and when the sample is shifted out it is increased from 13 bits to 16 bits by the insertion of zero's between the sign bit and the next significant bit.

The 16 bit sample is in signed magnitude format. To facilitate subtraction when negative samples are received the signed magnitude format is converted to a 2's complement by a converter 24.

The 2's complement formatted bit stream is fed to a mode control circuit 26 which controls whether one six party or two three party conferences are taking place and routes the bit stream accordingly. Six serial adders 28, 30, 32, 34, 36, 38 are arranged in two groups of three. Their inputs are fed from the mode control circuit 26 and they each output to a multiplexer 40. All the adders are clocked simultaneously, but at any one time five are adding and one is outputting. The output from the adders is fed via the multiplexer 40 through a second 2's complement converter 42 and the signed magnitude formatted output sample is shifted into a sixteen stage shift register 44 in which the most significant three bits following the sign bit are interrogated to see if overflow has occurred. If overflow has occurred the sign bit is maintained and all 1's are forced at the output of the register 44. This forces 'top' or 'bottom' code dependent upon the sign bit. A compander 46 takes 11 bits of the shift register 44 with the sign bit. This 12 bit linear pcm code is converted by combinational logic to 8 bit A-law pcm.   r The output of the compander 46 is then stored in a buffe register 48 prior to being loaded into a serial output register 50. The serial output register comprises a shift register with a parallel load facility which outputs the samples onto a speech bus 52. It is possible to 'chain' together the outputs of several conference chips.

The shift register is continually clocked but new conference samples are parallel loaded at six regular time intervals throughout a frame period. In the other time slots the register contains either information from the preceding i.c. or an invalid code. The Control 18 consists of a main eight stage synchronous counter clocked by a system 2048 KHZ clock and kept in synchronism by a system 1KHZ Clock. A second five stage counter is clocked from the above eight stage counter. This second counter is reset six times a frame and is used to time each addition process. All resets, clears, stop-start and clock gating signals are derived from either of the two counters. A microprocessor interface 54 uses control signals from a microprocessor to effect information exchange to and from the conference circuit which is conveniently formed in a single conference chip. The interface circuitry contains six seven bit stores and one one bit store. These stores can be written to and read from by the microprocessor using a 5 bit addressing system, a seven bit data bus and two control lines. The stores contain the time slot allocation of the parties to be conferenced and these values are used in a comparison with a time slot counter to activate the conference circuit input store to read from the speech buses at the correct time.

The circuit can conference a number of companded pcm encoded signals from a number of telephones in a small exchange system. The circuit is realisable as a single integrated circuit, no external storage is required, a simple control interface is used, and more flexible conferencing arrangements are possible.

As the technology of custom large scale integrated circuit devices improves, the speed and packing density

0135383

will increase enabling more parties in more conference configurations to be realised. The specification has only described the use of CCITT. A-law compression code, but u-law may also be realised, using similar techniques.

Integration of a whole small switching system may be possible using this method. All conference, storage and control functions may be contained in one l.s.i. chip. The selective addition method has a reduced number of operations in comparison with other methods and leads to more flexibility.

CLAIMS:-

1. A conference bridge circuit arrangement for interconnecting a predetermined number of telephone sets in a pulse code modulation telephone system including means for selecting a predetermined number of signals from one or more data buses, the of each data bus being adapted to carry a plurality of multiplexed pulse code modulated signals each representing a speech signal from one of a plurality of telephone sets, means for serially adding the signals selected, means for multiplexing the output signals from the serially adding means and means for retransmitting the multiplexed signals, whereby a combination of speech signals is received by each of the predetermined number of telephone sets.

2. A conference bridge circuit arrangement as claimed in claim 1 in which the means for selecting the predetermined number of signals comprises timing means adapted to select the time slot allocation of the parties to be conferenced.

3. A conference bridge circuit arrangement as claimed in claim 2 in which the time slot allocation of the parties to be conferenced is contained in store means.

4. A conference bridge circuit arrangement as claimed in claim 3 in which the store means is addressable by a microprocessor.

-8-

5. A conference bridge circuit arrangement as claimed in claim 1 in which the predetermined number of telephone sets to be interconnected is six.

6. A conference bridge circuit arrangement as claimed in claim 5 comprising control means adapted to interconnect either all the six telephone sets together or two groups of three telephone sets together.

7. A conference bridge circuit arrangement as claimed in any preceding claim in which the signals from the one or more data buses are compression-law coded, means being provided for deriving linear binary coded signals therefrom before the serial addition of the signals, and means for deriving compression-law coded signals for retransmission.

Fig. 1.

2/2

0135383

Fig.2.